# EUROPEAN PATENT SPECIFICATION

(11) **EP 2 581 207 B1**
(45) Date of publication and mention of the grant of the patent: **28.09.2016**
(21) Application number: 11803365.3
(22) Date of filing: 23.03.2011
(51) Int. Cl.: B29D 30/26, B29D 30/20, B29D 30/30, B29D 30/32

(54) **METHOD FOR FORMING GREEN TIRE, AND METHOD FOR PRODUCING PNEUMATIC TIRE**
VERFAHREN ZUR FORMUNG VON REIFENROHLINGEN UND VERFAHREN ZUR HERSTELLUNG VON LUFTREIFEN
PROCÉDÉ DE FORMATION DE PNEU VERT, ET PROCÉDÉ DE PRODUCTION DE PNEU

(30) Priority: 09.07.2010 JP 2010157065
(43) Date of publication of application: 17.04.2013
(73) Proprietor: Sumitomo Rubber Industries, Ltd., Kobe-shi, Hyogo 651-0072 (JP)
(72) Inventor: MARUOKA, Kiyoto, Kobe-shi Hyogo 651-0072 (JP); ONIMATSU, Hiroyuki, Kobe-shi Hyogo 651-0072 (JP)
(74) Representative: Manitz, Finsterwald & Partner GbR
(86) International application number: PCT/JP2011/056945
(87) International publication number: WO 2012/005029

(56) References cited:
- JP-A- H11 333 945
- JP-A- 2001 030 370
- JP-A- 2001 105 508
- JP-A- 2004 122 658
- JP-A- 2006 048 924
- JP-A- 2007 168 189
- US-A- 4 667 574
- US-A1- 2008 017 297
- US-B1- 6 364 981
- US-B2- 7 426 950

## Description

### TECHNICAL FIELD

The present invention relates to a green tire forming method and a pneumatic tire producing method being capable of forming efficiently the green tire with a butt-jointed carcass ply. The features of the preamble of the independent claim are known from JP 2004 122658 A. Related technologies are known from US 2008/017297 A1 and US 6 364 981 B1.

### BACKGROUND OF THE INVENTION

with regard to form a green tire (unvulcanized tire), to wrap a single layer of a sheet-like carcass ply member for forming the carcass ply around an outer periphery of a cylindrical drum, and both circumferential end portions of the sheet-like carcass ply member are jointed each other.

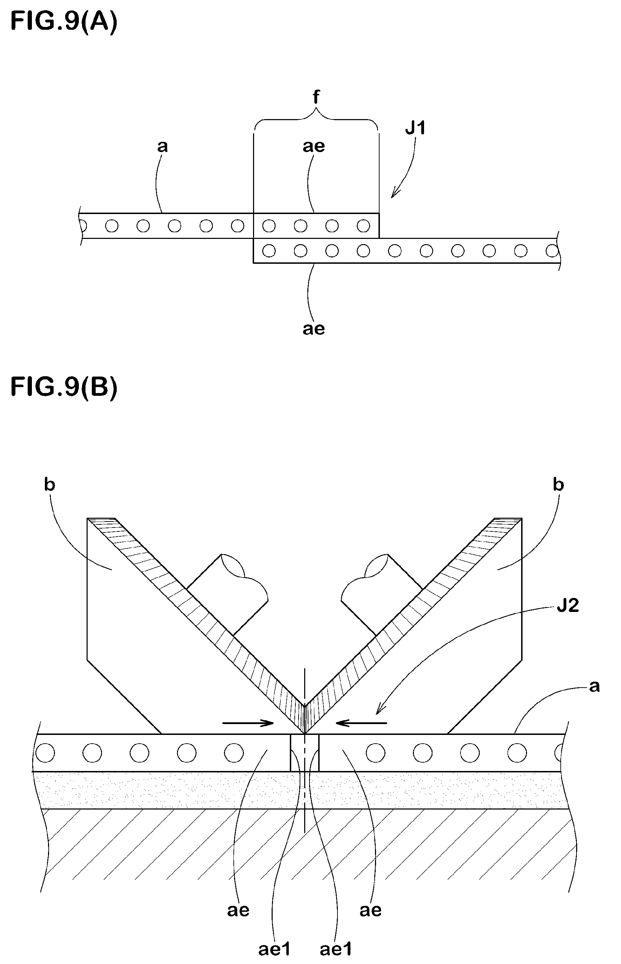

As known examples of this jointing method, there are an overwrap joint J1 where both circumferential end portions (ae) of a carcass ply member (a) are overwrapped each other to joint as shown in Fig. 9 (A), and a butt-joint J2 (see Patent Document 1) where by use of a joint apparatus with a pair of conical bodies (b), the both end surfaces (ae1) of end potions (ae) are jointed by confronting each other as shown in Fig. 9 (B).

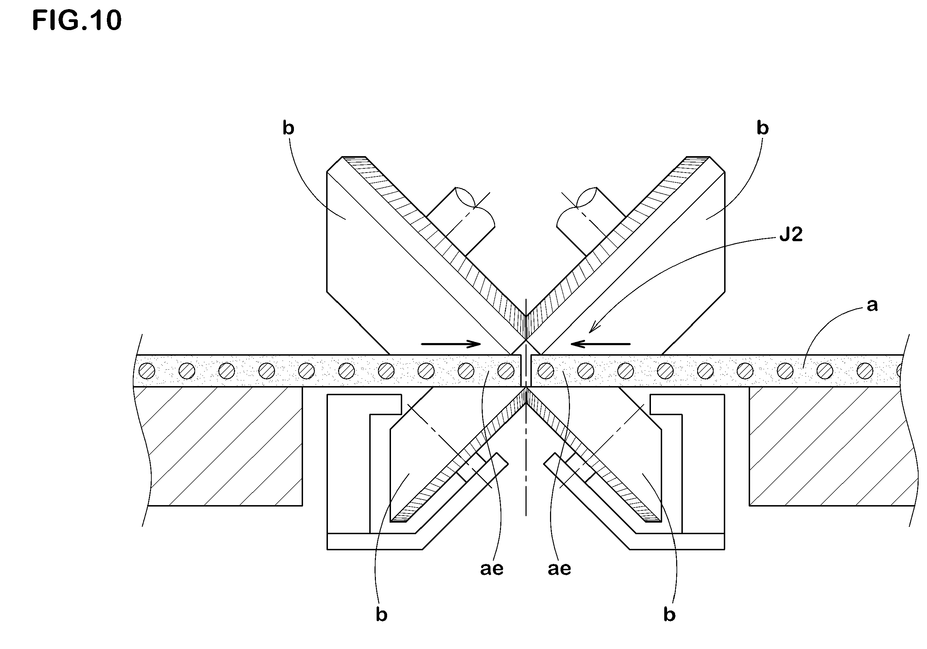

The butt-joint J2 does not make any overwrap part (f) between the end portions (ae) such as the overwrap joint J1, and there is not any unevenness of thickness nor of ri gi di ty caused by the overwrap potion. It has therefore an advantage of improving the tire uniformity and the appearance. However, there are problems that the confronting force between the end surfaces (ae1) is weak, and it has insufficient joint strength. Recent years, to enhance the joint strength, a method was proposed as shown in Fig. 10, that a pair of conical bodies (b) were arranged over-and-under (inward-and-outward in the drum radial direction), and pull the end portions (ae) from the both sides of the carcass ply member (a) so as to joint them (See Patent Document 2).

However, while forming the green tire, an inner liner rubber member for forming the inner liner rubber is wound on the drum before forming the carcass ply member. Therefore, a new problem arises that this inner liner rubber member interferes in butt-jointing the carcass ply member (a) from the both over-and-under sides.

### STATE OF ART REFERENCE

### PATENT DOCUMENT

Patent Document 1: Japanese unexamined Patent Application Publication No. 2005-153349.
Patent Document 2: Japanese Unexamined Patent Application Publication No. 2007-320196.

### SUMMARY OF THE INVENTION

### PROBLEMS TO BE SOLVED BY THE INVENTION

It is an object of the present invention to provide the green tire forming method and the pneumatic tire producing method being capable of forming the green tire having an improved joint strength of the joint portion with efficiency and high accuracy.

### MEANS FOR SOLVING THE PROBLEM

To solve the above-mentioned problem, the present invention according to claim 1
claims
a green tire forming method, comprising:
a tubular carcass with bead cores forming process to form a tubular carcass with bead cores on a first drum, which comprises
a tubular carcass forming step comprising
winding a sheet-like carcass ply member on an outer periphery of the first drum in a single layer, and
butt-jointing each circumferential end face of the carcass ply member each other, and
a bead core joining step comprising
putting a pair of bead cores on radially outwardly and axially both end sides of the tubular carcass on the first drum,
expanding a diameter of the fi rst drum with the tubular carcass so that the tubular carcass is pressed against an inner periphery of bead cores and is firmly jointed thereto;
a rubber laminate forming process to form a cylindrical rubber laminate having a smaller outside diameter than an inside diameter of the tubular carcass by winding rubber members for a base tire including an inner liner rubber member on an outer periphery of a second drum which is expandable in a diameter;
a first transport process to transport the tubular carcass with bead cores from the fi rst drum to the second drum by use of a transfer, and to maintain concentrically the tubular carcass with bead cores radially-outside the rubber laminate on the second drum;
a tubular base tire forming process by expanding the outside di ameter of the second drum wi th the rubber laminate so that the rubber laminate is pressed against the inner periphery of the tubular carcass with bead cores so as to form a tubular base tire formed by jointing integrally the rubber laminate with the tubular carcass with bead cores; and
a second transport process to transport the tubular base tire from the second drum to a shaping drum by use of a transfer.

The pneumatic ti re produci ng method according to claim 6 of the present invention is characteri zed in that the green ti re obtained in the above-mentioned green tire forming method is vulcanized after shaping.

In the present description, the "base tire" means a green (unvulcanized) ti re body in whi ch a tread portion has not been formed. The green tire is formed by jointing an annular tread ring, which is made of a belt ply member for forming a belt layer and of a tread rubber member for forming a tread rubber, for example, with this base tire.

The present i nventi on is made wi th the two drums as above stated. In the first drum, the tubular carcass with bead cores is formed by winding the single layer of the carcass ply member, butt-jointing the circumferential both end faces, and disposing the bead cores outwardly in the radial direction. In the second drum, the rubber laminate i s formed by wi ndi ng the base ti re rubber member compri si ng the inner liner rubber member.

In this way, the carcass ply member is wound on the different drum from that of the inner liner rubber member, and the inner liner rubber member does not interfere with it; and the both circumferential end faces of the carcass ply member can be butt-jointed from the both over-and-under si des. The joi nt strength of the joint portion can be sufficiently enhanced.

In the present invention, by use of the transfer, the tubular carcass with bead cores received from the first drum maintains concentrically outwardly in the radial direction of the rubber laminate on the second drum. Moreover, in this state, the second drum is expanded in a diameter, and the rubber laminate is pressed against the inner periphery of the tubular carcass with bead cores so as to integrate them. Therefore, without using any complicated apparatus, the above-mentioned rubber laminate and the tubular carcass with bead cores, which are formed separately, can be jointed easily with high accuracy and efficiency. Furthermore, since the above-mentioned jointing is performed by the diameter-expanding of the rubber laminate, the diameter of the tubular carcass with bead cores changes little, and it can prevent a rise of array disturbance of the carcass cord.

In the present invention, the tubular carcass with bead cores forming process on the first drum and the rubber laminate forming process on the second drum can be parallely taken. It can reduce process time and improve the formation efficiency of the green tire.

So-called a "strip-wind method" is proposed to form inner liner rubber, belt cushion rubber, chafer rubber, sidewall rubber and/or the like, for example, by winding the tape-like rubber strip spi rally. In this method, there are problems that the air is apt to rest between the rubber strips and that detachment is apt to arise between the rubber strips. However, in the present invention, at the time of the above-mentioned jointing, the rubber laminate is diameter-expanded. Therefore, a tension power at the time of this diameter-expanding can exhaust the air between the rubber strips. And, it brings efficacies to enhance an adhesive force by the pressure bonding between the rubber strips and to inhibit the detachment. Therefore, the present invention can be preferable for the stri p-wi nd method.

In parti cul ar, to form the inner liner rubber and the belt cushi on rubber in the strip-wind method brings significant benefits. In the inner liner rubber, cohesion between the strips is more enhanced by the diameter-expanding of the second drum, and air-impermeant property can be enhanced more than traditional one that made by jointing sheet-like inner liner rubbers. Moreover, since the shape of the belt cushion rubber had a large influence on a ground contacting shape, conventionally it was necessary to prepare belt cushion rubbers having an optimal cross-sectional shape according to each tire type, and it was likely to decline its productivity. However, owing to forming the belt cushion rubber in the strip-wind method, the cross-sectional shape can be formed by changing winding-pitch and the like of the rubber strip depending on the each tire type, and the productivity can greatly increase.

A diameter-expanding ratio Db/Da of an outside diameter Db of the expanded second drum to an outside diameter Da before expanding thereof is in a range of 1.025 ± 0.01. Owing to limiting the diameter-expanding ratio within this range, the air inclusion can be prevented; and the strength of the rubber member, particularly the strip for example, can be improved moderately. And, the thinning of the rubber member caused by an excessive diameter-expanding can be prevented.

### BRIEF EXPLANATION OF THE DRAWING

[Fig. 1] Fig. 1 is a cross-sectional view showing an embodiment of a vulcanized pneumatic ti re formed in the green tire forming method of the present invention.
[Fig. 2] Fig. 2 is a flowchart of the method for forming the green tire.
[Fig. 3] Fig. 3 is a process chart of the green tire forming method.
[Figs. 4] Figs. 4 (A) and (B) are a top vi ew and a si de vi ew showing a winding stage in a tubular carcass forming step.
[Figs. 5] Figs. 5 (A) and (B) are a side view and its partially enlarged view showing a joining stage in a tubular carcass forming step.
[Fig. 6] Fig. 6 is a figure showing a joining step of bead cores.
[Figs. 7] Fig. 7 (A) is a cross-sectional view showing a rubber laminate forming process, and Fig. 7 (B) is a partial cross sectional view showing a strip winding step.
[Fig. 8] Fig. 8 is a side view of a transfer.
[Figs. 9] Figs. 9 (A) and (B) are cross-sectional views of an overwrap joint and a butt joint of the carcass ply member.
[Fig. 10] Fig. 10 is a cross-sectional view showing a jointing by use of a butt joint apparatus comprising a pair of conical bodies in respective over-and-under sides.

### EXPLANATION OF THE REFERENCE

- 5: Bead core
- 6R1: carcass ply member
- 6R2: Tubular carcass
- 6R3: Tubular carcass with bead cores
- 11: Rubber laminate
- 20: First drum
- 27: second drum
- 30: Transfer
- 35: Tubular base tire
- 36: Transfer
- 37: Shaping drum
- Ga: Base tire rubber member
- G3a: Sidewall rubber member
- G4a: Chafer rubber member
- G10Ga: Inner liner rubber member
- J2: Butt joint
- K1: Tubular carcass with bead cores forming process
- K1a: Tubular carcass forming step
- K1b: Joining step of bead cores
- K2: Rubber laminate forming process
- K2a: Strip winding step
- K3: First transport process
- K4: Tubular base tire forming process
- K5: Second transport process
- T4, T3: Rubber strips

### BEST MODE FOR CARRYING OUT THE INVENTION

Hereinafter, an embodiment of the present invention well now be explained particularly.

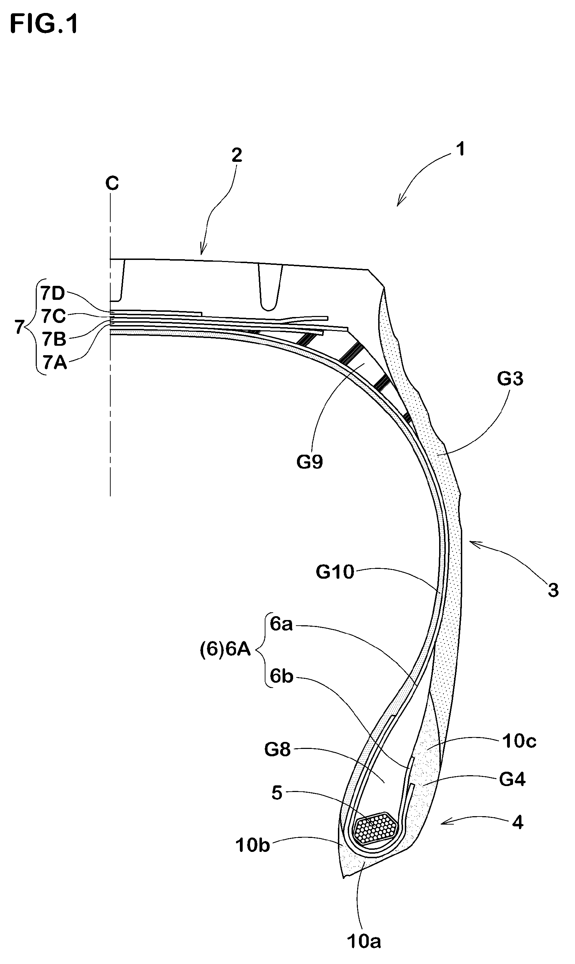

Fig. 1 is a cross-sectional view showing an embodiment of a vulcanized pneumatic tire formed in a green tire forming method of the present invention.

In Fig. 1, a pneumatic tire 1 of the present embodiment is a heavy-duty radial tire. The pneumatic tire 1 comprises at least a carcass 6 extending from a tread portion 2 to a bead core 5 of a bead portion 4 through a sidewall portion 3, and a tread reinforcing belt layer 7 disposed outside the carcass 6 in the radial direction of the tire in the tread portion 2.

The carcass 6 is formed by a single carcass ply 6A made of an arrangement body of carcass cords arranged at an angle of from 70 to 90 degrees with respect to the tire circumferential direction and coated with topping rubber. The carcass ply 6A comprises a toroidal-shaped ply main portion 6a extending between the bead cores 5, 5; and a pair of turned up portion 6b each of which is turned up and secured around each of the bead cores 5 from inside to outside. Between the ply main portion 6a and the turned up portion 6b, a bead apex rubber G8 is provided for bead reinforcement which extends from the bead core 5 outwardly i n the radial direction in a tapered manner.

The belt layer 7 is formed by at least two belt plies made of an arrangement body of belt cords and coated with topping rubber. In the present embodiment, the belt plies comprise a first belt ply 7A disposed innermost in the tire radial direction and comprising the belt cords arranged at an angle of 60 ± 15 degrees, for example, with respect to the tire circumferential direction, and second to fourth belt plies 7B, 7C, and 7D disposed gradually outwardly in the radial direction and comprising the belt cords arranged at a small angle of from 10 to 35 degrees, for example, with respect to the tire circumferential direction. The axially outer ends of the belt layer 7 are gradually apart from the carcass 6 according as the ends are located in axially outsider, and the separated portion thereof is provided with a belt cushion rubber G9 having a substantially triangle shape of a cross-section. The belt cushion rubber G9 is made of a comparatively soft rubber to follow the deformation of the outer end of the belt layer 7 during running under load, and inhibits a belt-end separation by absorption and distribution of its strain.

An inner liner rubber G10 is provided on the i nsi de of the carcass 6 to form the tire cavity surface. A sidewall rubber G3 is provided on the outside of the carcass to form the outer surface of the sidewall portion 3. A chafer rubber G4 having a substantially U-shape of a cross-section is provided in the bead portion 4, which comprises a basal portion 10a forming a bead bottom, an inner portion 10b forming the inner surface of the bead portion 4 disposed in axially inner end of the basal portion 10a, and an outer portion 10c forming the outer surface of the bead portion 4 disposed in axially outer end of the basal piece 10a.

The inner liner rubber G10 is made of a rubber having air-impermeant property such as butyl rubber and halogenated butyl rubber, for example, and keeps airtightly the high-pressure air filled up in the tire cavity. The sidewall rubber G3 is made of a comparatively soft rubber having inflection resistance, ozon resistance, tearing resistance and the like. The sidewall rubber G3 follows the deformation of the carcass 6 and covers protectively the carcass 6 against injury. The chafer rubber G4 is made of a harder rubber than the sidewall rubber G3 and has the wear resistance and cut resistance, and prevents damages caused by shifting of the rim. The inner piece 10b and the outer piece 10c of the chafer rubber G4 are adjacent to the inner liner rubber G10 and the sidewall rubber G3, respectively.

The pneumatic tire 1 i s made by vul canizing an unvulcanised green tire in a vulcanization mold just like the traditional one, and the green tire is made in the following green tire forming method according to the present invention.

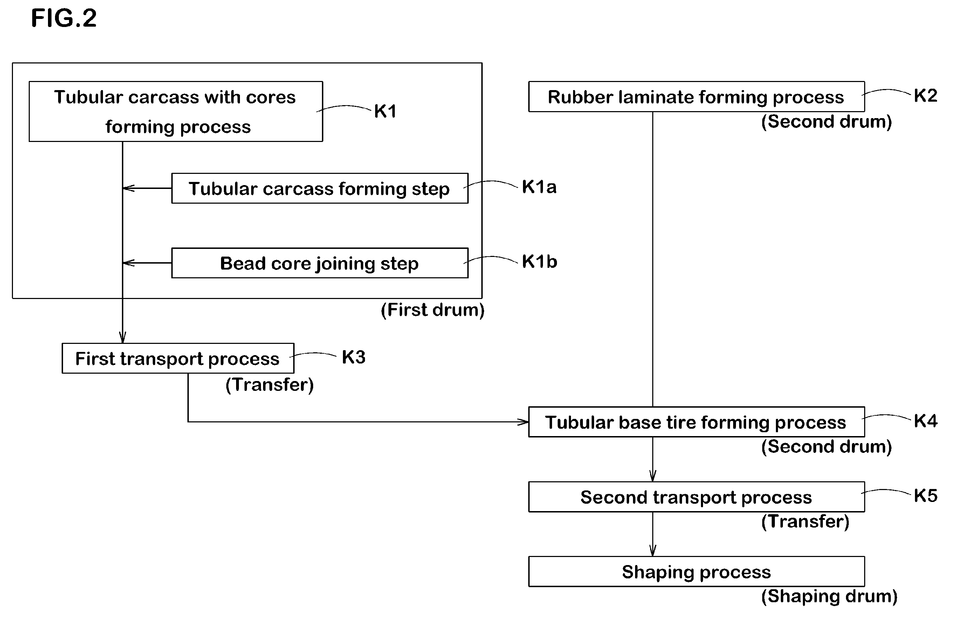

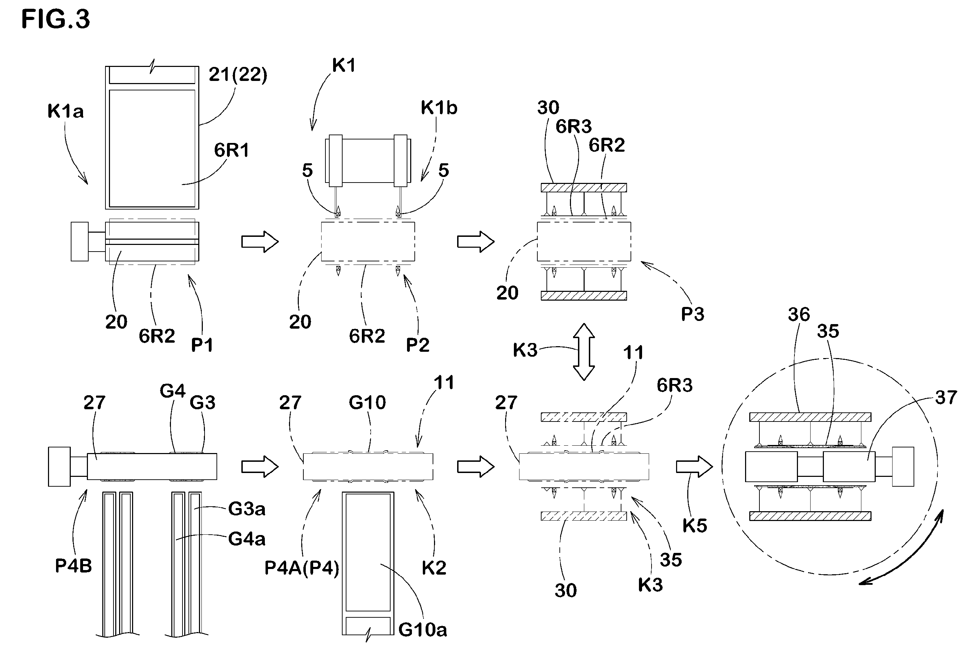

As shown in the flowchart of Fig. 2 and the process chart of Fig. 3, the green tire forming method comprises
a tubular carcass with bead cores forming process K1,
a rubber laminate forming process K2,
a first transport process K3,
a tubular base tire forming process K4, and
a second transport process K5.

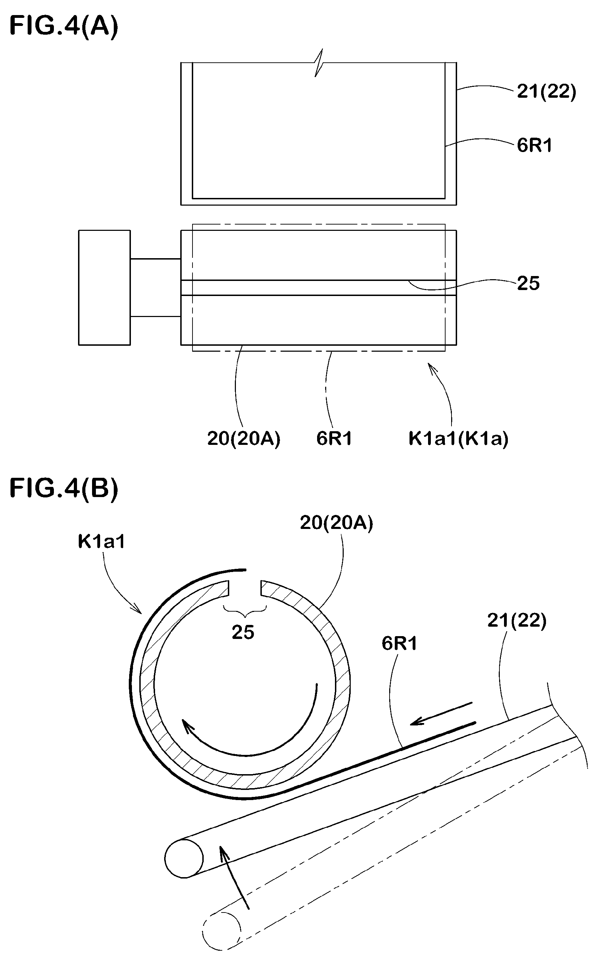

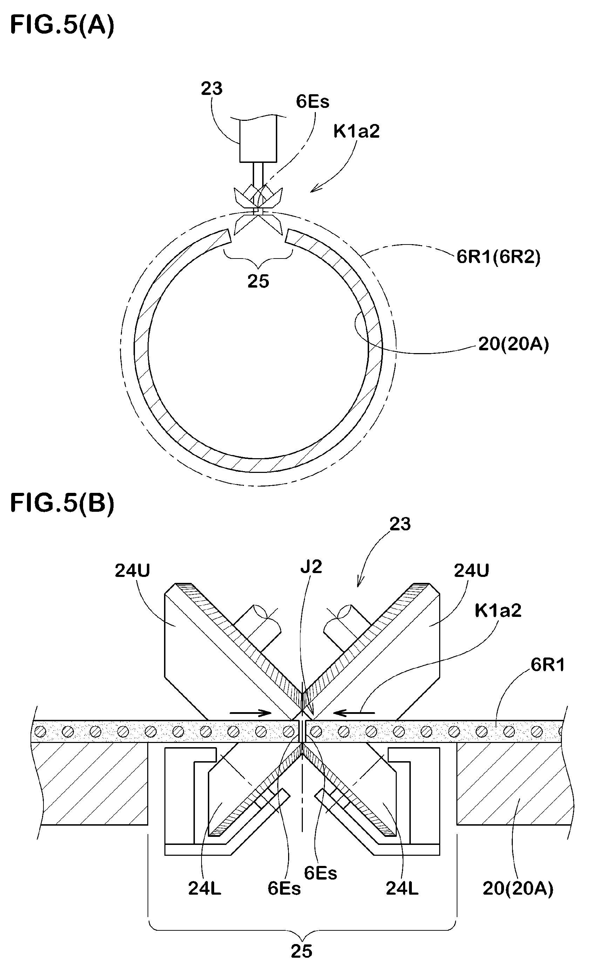

The tubular carcass with bead cores forming process K1 comprises a tubular carcass forming step K1a and a bead core joining step K1b, and makes a tubular carcass with bead cores 6R2 on a first drum 20. The tubular carcass forming step K1a comprises
a wi ndi ng stage K1a1 to wi nd a single layer of a sheet-like carcass ply member 6R1 for forming a carcass ply on its outer periphery by use of the first drum 20 as shown in Fig. 4, and
a butt-jointing stage K1a2 to butt-joint the circumferential end faces 6Es of the single layer of the carcass ply member 6R1 wound as mentioned above by facing each other, as shown in Fig. 5.

More particularly, in the winding stage K1a1, the carcass ply member 6R1 supplied from a ply servicer 22 by use of the belt conveyor 21 is pushed onto the outer periphery of the first drum 20 so as to wind as a single layer of the carcass ply member 6R1 while rotating this first drum 20. The belt conveyor 21 of the present embodiment is pivotally supported freely in tilting over-and-under with setting its upper stream side in the conveyance direction as a supporting point, and the conveyance surface is pushed from the downstream onto the fi rst drum 20 so as to wind the carcass pl y member 6R1 while being pushed onto the drum 20.

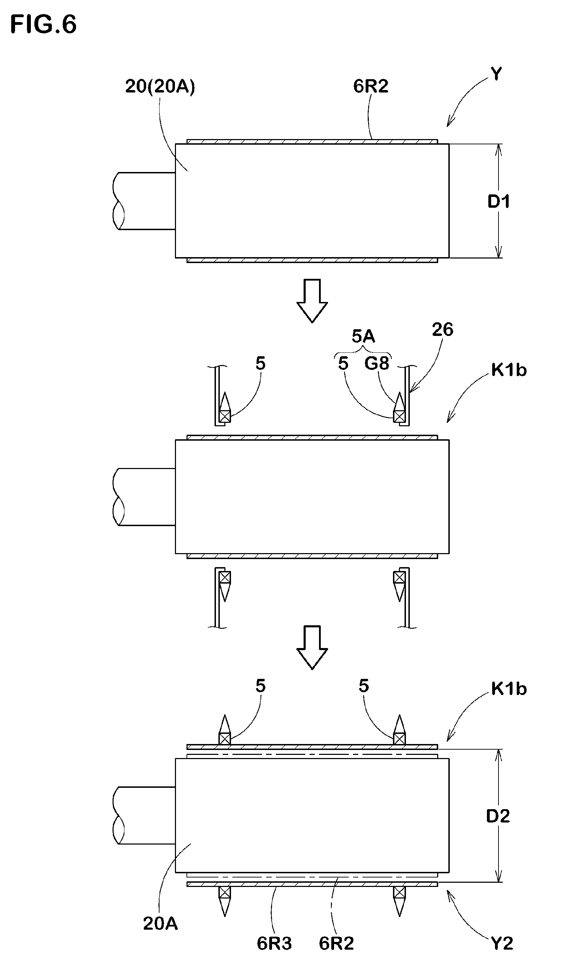

Incidentally, the first drum 20 comprises a drum portion 20A having a straight cylinder shape. As shown in Fig. 6, in a well-known scalable diameter method, the diameter of the drum portion 20A is scalable between a diameter D1 at a reference state Y1 and a diameter D2 at a di ameter-expanded state Y2. The reference state Y1 i s defi ned as a state of winding at least a single layer of the above-mentioned carcass ply member 6R1. The expanded diameter state Y2 is defined as a state of joining by pressing the carcass ply member 6R1 against the inner peri phery of the bead core 5 di sposed outwardly in the radial direction of the carcass ply member 6R1. The above-mentioned drum portion 20A is provided with a cutout 25 (shown in Fig. 4) through which a conical body 24 and the like of a joint apparatus 23 passes is formed overall length in the direction of the shaft center of the drum.

As shown in Fig. 5, in the above-mentioned butt-jointing stage K1a2, by use of the well-known joint apparatus 23, the circumferential end faces 6Es and 6Es of the carcass ply member 6R1 are butt-jointed so as to form the tubular carcass 6R2 continuing in the circumferential direction. The joint apparatus 23 of the present embodiment comprises a pair of upper conical bodies 24U, 24U di sposed outward in the radial direction, and a pair of lower conical bodi es 24L, 24L di sposed inward in the radial direction. The carcass pl y member 6R1 is sandwiched from both inward-and-outward in the ti re radial direction and is drawn respective end parts so as to face each other by a powerful force, and the joint strength can be increased. Incidentally, a preferably example of the joint apparatus 23 to be used is shown in Japanese unexamined Patent Application Publication No. 2007-320196.

In the bead core joining step K1b, as shown in Fig. 6, after putting the bead core 5 on the axially both sides of the tubular carcass 6R2 and on the radially outer side, the first drum 20 is expanded in a siameter with the tubular carcass 6R2. Therefore, a tubular carcass with bead cores 6R3 is formed by pressing the tubular carcass 6R2 against the inner periphery of the bead core 5 and integrally joining. Moreover, since the carcass ply member 6R1 is wound on the straightly cylindrical first drum 20 directly, and is joined to the bead cores 5 while keeping its straightly cylindrical shape to by diameter-expanding with this drum 20, an arrangement of the carcass cords under the bead core 5 and a carcass cord path between the bead cores 5, 5 can be maintained uniformly. The bead core 5 is supplied onto the tubular carcass 6R2 by use of the traditional well-known bead core supply device 26. Incidentally, an example of the bead core 5 to be used is a bead core assembly 5A can be used, which is provided on its outer periphery with the bead apex rubber G8 integrally jointed, as shown in the present embodiment.

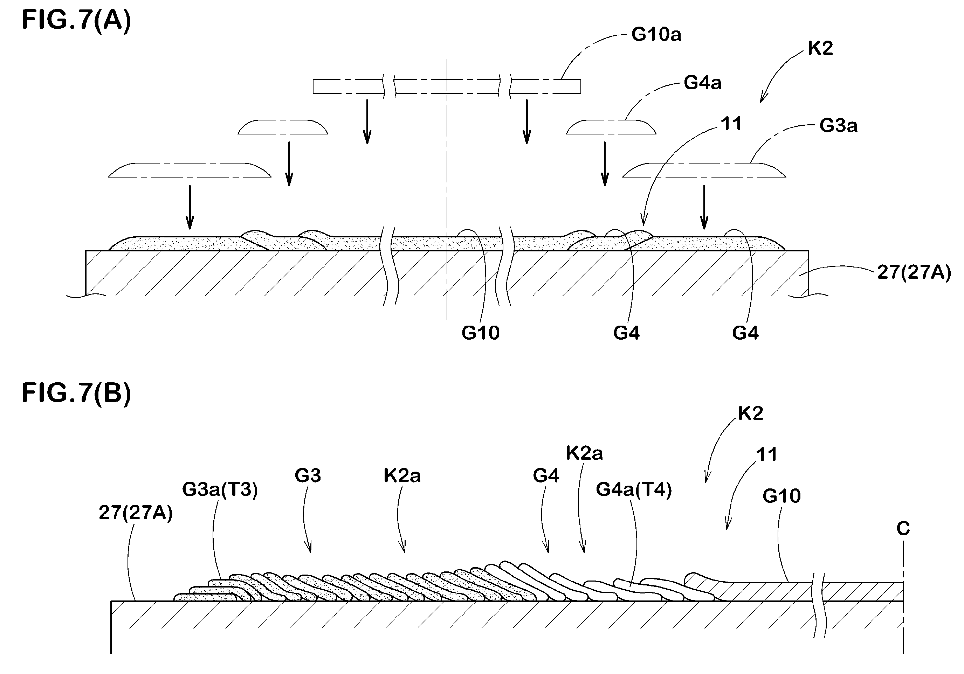

In the rubber laminate forming process K2, as shown in Fig. 7 (A), rubber members for base ti re Ga including an inner liner rubber member G10a for forming the inner liner rubber G10 are gradually wound on its outer periphery of the second drum 27 so as to form the cylindrical rubber laminate 11 having a smaller outside diameter than an inside diameter of the above-mentioned tubular carcass 6R2. The second drum 27 comprises a scalable and straightly-cylindrical drum portion 27A as the same as the above-mentioned first drum 20.

As mentioned above, the base ti re means a green ti re body on which no tread portion has been formed. The above-mentioned rubber member for base tire Ga means a rubber member to form this base tire. The rubber member for base tire Ga comprises a chafer rubber member G4a for forming the above-mentioned chafer rubber G4 and a sidewall rubber member G3a for forming the sidewall rubber G3 besides the inner liner rubber member G10a.

In the present embodiment, as shown in Fig. 7 (B), the chafer rubber member G4a and the sidewall rubber member G3a are formed of tape-like long rubber strips T4, T3, respectively. The forming process of rubber laminate K2 comprises a strip winding step K2a to wind spirally each of the rubber strips T4, T3. More particularly, the rubber strips T3, T4 are wound gradually and spirally on the above-mentioned drum part 27A so as to form a layer of the sidewall rubber G3 and a layer of the chafer rubber G4. Between the chafer rubbers G4, G4, there is a layer of the inner liner rubber G10 formed by wrappi ng a single layer of the sheet-like inner liner rubber member G10a in the present embodiment. Incidentally, it comes near to stating the obvious that also the inner liner rubber G10 may be formed by spirally winding the rubber strip (not shown).

when providing on the ti re with a cord reinforcing pl y (not shown) for reinforcement of the bead portion and with a cord reinforcing ply (not shown) for reinforcement of the sidewall portion, for example, a layer of the cord reinforcing ply may be formed on the rubber laminate 11 by winding the member for forming the cord reinforcing ply in this forming process of rubber laminate K2.

In the first transport process K3, by use of a transfer 30, the above-mentioned tubular carcass with bead cores 6R3 is transferred from the first drum 20 to the second drum 27, and concentrically maintained radially-outside the rubber laminate 11 on the second drum 27.

In the present embodiment, as shown in Fig. 3, the first drum 20 is reciprocatably movable from a supplying position of carcass ply P1 through a supplying position of bead core to a supplying position of tubular carcass P3. The second drum 27 is also reciprocatably movable from a supplying position of base ti re rubber P4 to a receiving position of tubular carcass P5. In the present embodiment, the supplying position of base tire rubber P4 comprises a suppl yi ng position of fi rst base tire rubber P4A to supply the inner liner rubber member G10a; and a supplying position of second base ti re rubber P4B to supply other base tire rubber members Ga compri si ng the sidewall rubber member G3a and the chafer rubber member G4a. Either of the supply point P4A or the supply point P4B may be formed on the upper stream in the conveyance direction. The above-mentioned transfer 30 is reciprocatably movable between the supplying position of tubular carcass P3 and the receiving position of tubular carcass P5. The tubul ar carcass wi th bead cores 6R3 received from the first drum 20 is transferred to the receiving position of tubular carcass P5, and concentrically maintained radially-outside the rubber laminate 11 at this point P5.

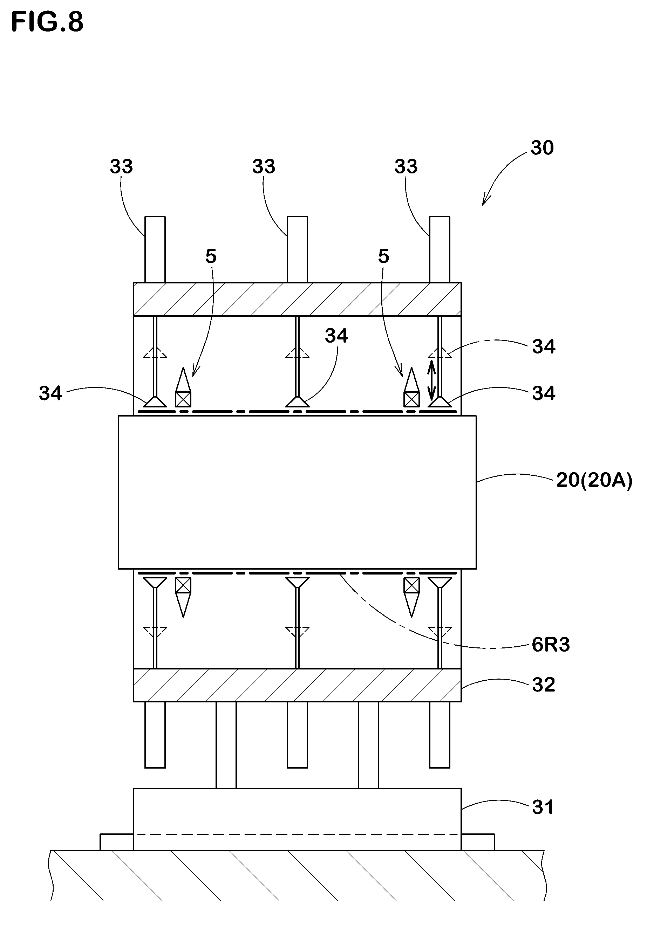

As shown conceptually in Fig. 8, in the present embodiment the transfer 30 comprises
a movable pedestal 31 which is reciprocatable between the supplying position of tubular carcass P3 and the receiving position of tubular carcass P5, and an annular supporting frame 32 attached to the movable pedestal 31 and being possibly the same concentric as the first drum 20 and the second drum 27 at the positions P3, P5. And, in the both axial sides of the supporting frame 32, the both axial sides and a central region in the present embodiment, a plurality of cylinders 33 are spaced at an interval in the circumferential direction, of which rod end is headed for the shaft center of the supporti ng frame 32. The each rod end is provided wi th a sucti on appliance 34 such as a vacuum pad and the like, for example. Therefore, the transfer 30 at the state of outserting the first drum 20, by stretching the cylinder 33, the suction appliance 34 sucks and keeps the outer periphery and axial both sides of the tubular carcass with bead cores 6R3 on the first drum 20. And after that, owing to the diameter reduction of the first drum 20, the tubular carcass with bead core 6R3 can be received from the first drum 20. At the position P5, the transfer 30 can concentrically maintain the tubular carcass with bead core 6R3 radially-outside the rubber laminate 11.

In the tubular base tire forming process K4, at the state of maintaining the tubular carcass with bead core 6R3 concentrically, the second drum 27 is diameter-expanded wi th the rubber laminate 11. Therefore, the rubber laminate 11 can be pressed against the inner periphery of the tubular carcass with bead cores 6R3 in the outside thereof, and a tubular base tire 35 formed by jointing integrally the rubber laminate 11 with the tubular carcass with bead cores 6R3. when turning off the vacuum and shrinking the rod of the cylinder 33, the transfer 30 releases the tubular base tire 35 and returns to the above-mentioned supplying position of tubular carcass P3.

A diameter-expanding ratio Db/Da of an outside diameter Db of the expanded second drum 27 to an outside diameter Da before expanding thereof is preferably in a range of 1.025 plus/minus 0.01. Owing to the limitation of the diameter-expanding ratio within the range, it can be prevented to include the air and to improve moderately the strength of the rubber member such as the inner liner rubber and the sidewall rubber (especially, a strip), for example. Moreover, it can also prevent from the enormous thinning of the rubber member caused by an excessive diameter-expanding.

In the present embodiment, when the tire 1 comprises the above-mentioned belt cushion rubber G9, the tubular base tire 35 on the second drum 27, which is released from the transfer 30, returns once to the supplying position of tire rubber P4 (for example, the supplying position of second base ti re rubber P4B); and at this supply position P4, the belt cushion rubber member (not shown) for forming the bel t cushi on rubber G9 is wound on the tubul ar carcass 6R3. Such a belt cushion rubber G9 is also preferably formed by winding spirally the unvulcanised rubber strip. The belt cushion rubber G9 has a large impact on the ground contacti ng shape dependi ng on shapes; therefore, under ordinary circumstances, it is necessary to prepare an optimal cross sectional shape according to tire type. However, by forming the belt cushion rubber G9 in the strip-wind method, the cross sectional shape can be optimize according to tire type in each case by changing the winding pitch and the like so as to make remarkable progress in production efficiency. Moreover, in the above-mentioned bead core joining step K1b, when the bead core 5 is used in place of the above-mentioned bead core assembly 5A, the bead apex rubber member (not shown) for forming the bead apex rubber G8 is wound on the outer periphery of the bead core 5 in this stage.

After that, the tubular base ti re 35 with the belt cushion rubber G9 and the like is transported in a second transport process K5 having the same composition as the transfer 30, to the shaping drum 37 after receiving at the receiving position of tubular carcass P5 from the second drum 27 and is mounted on the shaping drum 37.

An example of this shaping drum 37 to be used is a traditional well-known shaping drum. On a conventional shaping process, the transported tubular base tire 35 is inflated so as to have a toroidal shape between the bead cores 5, 5; the inflated portion is pressed against the inner periphery of the tread ring previously awaiting outside in the radial direction ; and the toroidal green tire is formed by jointing integrally. And, the shaped green tire is vulcanized so as to accomplish the pneumatic tire.

In this way, in the green tire forming method of the present invention, since the carcass ply member 6R1 is wound on a different drum from the inner liner rubber member G10a, the carcass pl y member 6R1 can be butt-joi nted solidly wi thout bei ng di stracted by the inner liner rubber member G10a. In the present invention, the tubular carcass with bead cores forming process K1 on the first drum 20 can be conducted on a parallel with the rubber laminate forming process K2 on the second drum 27, and it can save the time and improve forming-efficiency of the green tire.

In the process K1, the carcass ply member 6R1 is wound directly on the straightly cylindrical first drum 20, and it is diameter-expanded while keeping the shape of the straight cylinder and jointed with the bead cores 5. Therefore, the arrangement of the carcass cords under the bead core 5 and the carcass cord path between the bead cores 5, 5 can be maintained uniformly.

Moreover, since the tubular carcass with bead cores 6R3 and the rubber laminate 11 separately formed are integrally jointed each other by the diameter-expanding of the second drum 27 while keeping the straight cylinder shapes, the tubular base tire 35 can be formed easily, with high accuracy and efficiently without using any complex apparatus. At the time of jointing, the rubber laminate 11 is diameter-expanded. Therefore, when the rubber laminate 11 comprises a layer of the rubber member in the strip-wind method, a tension power of this diameter-expanding discharges the air between the rubber strips. The pressure bonding of the tension power acting between the rubber strips and the adhesive property is enhanced, and the separation between the rubber strips can be inhibited.

Although the especially preferred embodiments of the pneumatic tire and the method for manufacturing it in the present invention have been descri bed in detail, needl ess to say, the i nventi on is not limited to the above-mentioned concrete embodiments, and various modifications can be made.

### EXAMPLE

Heavy duty radial tires having tire sizes of 11R22.5 were made in accordance with the method of the present invention (Examples), and various properties were tested. A tire having a carcass ply overwrap-jointed (comparative Example) was also tested in the same manner. Test methods were as follows.

### [Test 1 (Test for air-permeability of inner liner)]

The test tire was inflated at an air pressure of 700 kPa, the air pressure was measured after running 100,000 km on a drum under the following condition. The test result was displayed using indices with the air pressure of comparative Example 1 being 100. The larger the numeric val ue was, the smaller the air leakage was; and the more favorable it was.
Rim: 7.50 x 22.5
Tire load: 26.7 kN
Velocity: 80 km/H

### [Test 2 (Test for air inclusion while forming tire)]

one hundred tires were vulcanized and each tire was examined whether any air-inclusion are included using sialography method that can judge the presence of air-inclusion by interference fringe in a vacuum circumstance. The evaluation was displayed using indices on percentage of "the number of ti re including the ai r / 100". The smaller the numeric value was, the more favorable it was. The test result was shown in Table 1.

**[Table 1]**

| | Ref. Example | Example 1 | Example2 | Example 3 | Example 4 | Example 5 | Example 6 |
|---|---|---|---|---|---|---|---|
| Forming of inner liner | SJT | STW | STW | STW | STW | STW | SJT |
| Forming of belt cushion rubber | SJT | STW | STW | STW | STW | STW | SJT |
| Forming of chafer rubber | SJT | STW | STW | STW | STW | STW | STW |
| Forming of sidewall rubber | SJT | STW | STW | STW | STW | STW | STW |
| Diameter-expanding ratio | - | 1.025 | 1.033 | 1.017 | 1.04 | 1.008 | 1.025 |
| Test 1 [Index] | 100 | 104 | 103 | 104 | 101 | 103 | 103 |
| Test 2 [%] | 1 | 0 | 0 | 0 | 0 | 1 | 0 |

| | | | | | | | |
|---|---|---|---|---|---|---|---|
| SJT: Jointing of a single sheet; STW: Strip-wind method | | | | | | | |

For the test result, it was confirmed that Examples excelled in the result of the tests 1 and 2.

## Claims

1. A green tire forming method comprising
a tubular carcass with cores forming process (K1) to form a tubular carcass (6R2) with bead cores on a first drum (20), which comprising
a tubular carcass forming step (K1a) comprising
winding (K1a1) a sheet-like carcass ply member (6R1) on an outer periphery of the fi rst drum (20) in a single layer, and
a bead core joining step (K1b) comprising
putting a pair of bead cores (5) on radially outwardly and axially both end sides of the tubular carcass (6R2) on the first drum (20), and
expanding a diameter of the first drum (20) with the tubular carcass (6R2) so that the tubular carcass (6R2) is pressed against an inner periphery of bead cores (5) and firmly jointed thereto;
a rubber laminate forming process (K2) to form a cylindrical rubber laminate (11) having a smaller outside diameter than an inside diameter of said tubul ar carcass (6R2) by wi ndi ng rubber members (Ga) for a base tire including an inner liner rubber member (G10a) on an outer periphery of a second drum (27) which is expandable in a diameter;
a first transport process (K3) to transport said tubular carcass with bead cores (6R3) from said first drum (20) to the second drum (27) by use of a transfer (30), and to maintain concentrically the tubular carcass with bead cores (6R3) radially-outside the rubber laminate (11) on the second drum (27);
a tubul ar base ti re forming process (K4) by expanding the outside diameter of the second drum (27) with the rubber laminate (11) so that the rubber laminate (11) is pressed against the inner periphery of said tubular carcass with bead cores (6R3) so as to form a tubular base tire (35) formed by jointing integrally said rubber laminate (11) with the tubular carcass with bead cores (6R3);
**characterized by**
a second transport process (K5) to transport said tubular base tire (35) from said second drum (27) to a shaping drum (37) by use of a transfer (36),
wherein the tubular carcass forming step (K1a) further comprises butt-jointing (K1a2) each circumferential end face (6Es) of the carcass ply member (6R1) each other, and
wherein a diameter-expanding ratio Db/Da of an outside diameter Db of the expanded second drum to an outside diameter Da before diameter-expanding thereof is in a range of 1.025 plus/minus 0.01.

2. The green tire forming method as set forth in claim 1, wherein said base tire rubber member (Ga) comprises at least a chafer rubber member (G4a) and a sidewall rubber member (G3a); a tape-like long rubber strip (T3, T4) is used for each of the chafer rubber member (G4a) and the sidewall rubber member (G3a); and said lamination forming process (K2) comprises a strip winding step to spirally wi nd each of said rubber strips (T3, T4).

3. The green ti re forming method as set forth in claim 1 or 2, wherein a tape-like long rubber strip is used for said inner liner rubber (G10a), and said lamination forming process (K2) of comprises a strip winding step to spirally wind each of said rubber strips.

4. The green tire forming method as set forth in any one of claims 1 to 3, wherein the method comprises a forming step to form a belt cushion rubber (G9) by wi ndi ng spirally a tape-like long rubber strip outside said carcass ply.

5. The green tire forming method as set forth in any one of claims 1 to 4, wherein in said forming step (K1) of tubular carcass, circumferential end faces (6Es) of said carcass ply member (6R1) are butt-jointed each other from both inward-and-outward in the tire radial direction.

6. A pneumatic ti re produci ng method by use of the tubul ar base ti re obtained in the green tire forming method as set forth in any one of claims 1 to 5, wherein
the pneumatic tire producing method comprises
a toroidal green tire forming step comprising
inflating the tubular base tire between the bead cores (5) to have a toroidal shape, and pressing the inflated portion against the inner periphery of the tread ring previously awaiting outside in the radial direction and by jointing integrally, and
a green tire vulcanizing step.

## Patentansprüche

1. Rohreifen-Formungsverfahren, umfassend
einen Formungsprozess (K1) für eine rohrförmige Karkasse mit Kernen, um auf einer ersten Trommel (20) eine rohrförmige Karkasse (6R2) mit Wulstkernen zu formen, welcher umfasst
einen Formungsschritt (K1a) für eine rohrförmige Karkasse, umfassend
Wickeln (K1a1) eines bahnartigen Karkasslagenelements (6R1) auf einen Außenumfang der ersten Trommel (20) in einer einzigen Schicht, und
einen Wulstkernfügeschritt (K1 b), umfassend
Setzen eines Paares Wulstkerne (5) an radial außen liegende und axial beide Endseiten der rohrförmigen Karkasse (6R2) auf der ersten Trommel (20), und
Ausdehnen eines Durchmessers der ersten Trommel (20) mit der rohrförmigen Karkasse (6R2), so dass die rohrförmige Karkasse (6R2) gegen einen Innenumfang von Wulstkernen (5) gepresst und fest mit diesen gefügt wird;
einen Formungsprozess (K2) für ein Kautschuklaminat, um ein zylindrisches Kautschuklaminat (11) mit einem kleineren Außenseitendurchmesser als ein Innenseitendurchmesser der rohrförmigen Karkasse (6R2) zu formen, indem Kautschukelemente (Ga) für einen Basisreifen, die ein Innerliner-Kautschukelement (G10a) umfassen, auf einen Außenumfang einer zweiten Trommel (27), deren Durchmesser erweiterbar ist, gewickelt werden;
einen ersten Transportprozess (K3), um die rohrförmige Karkasse mit Wulstkernen (6R3) von der ersten Trommel (20) zu der zweiten Trommel (27) unter Verwendung einer Transfereinrichtung (30) zu transportieren, und um die rohrförmige Karkasse mit Wulstkernen (6R3) radial außerhalb des Kautschuklaminats (11) auf der zweiten Trommel (27) konzentrisch zu halten;
einen Formungsprozess (K4) für einen rohrförmigen Basisreifen, indem der Außenseitendurchmesser der zweiten Trommel (27) mit dem Kautschuklaminat (11) ausgedehnt wird, so dass das Kautschuklaminat (11) gegen den Innenumfang der rohrförmigen Karkasse mit Wulstkernen (6R3) gepresst wird, um einen rohrförmigen Basisreifen (35) zu formen, der geformt wird, indem das Kautschuklaminat (11) integral mit der rohrförmigen Karkasse mit Wulstkernen (6R3) gefügt wird;
**gekennzeichnet durch**
einen zweiten Transportprozess (K5), um den rohrförmigen Basisreifen (35) von der zweiten Trommel (27) zu einer Formgebungstrommel (37) unter Verwendung einer Transfereinrichtung (36) zu transportieren,
wobei der Formungsschritt (K1a) für eine rohrförmige Karkasse ferner ein Stoßfügen (K1a2) jeder Umfangsstirnfläche (6Es) des Karkasslagenelements (6R1) aneinander umfasst, und
wobei ein Durchmesserausdehnungsverhältnis Db/Da eines Außenseitendurchmessers Db der ausgedehnten zweiten Trommel zu einem Außenseitendurchmesser Da vor deren Durchmesserausdehnung in einem Bereich von 1,025 plus/minus 0,01 liegt.

2. Rohreifen-Formungsverfahren nach Anspruch 1, wobei das Basisreifenkautschukelement (Ga) zumindest ein Wulstbandkautschukelement (G4a) und ein Seitenwandkautschukelement (G3a) umfasst; ein bandartiger, langer Kautschukstreifen (T3, T4) für ein jedes von dem Wulstbandkautschukelement (G4a) und dem Seitenwandkautschukelement (G3a) verwendet wird; und der Formungsprozess (K2) für ein Laminat einen Streifenwickelschritt umfasst, um einen jeden der Kautschukstreifen (T3, T4) spiralförmig zu wickeln.

3. Rohreifen-Formungsverfahren nach Anspruch 1 oder 2, wobei ein bandartiger, langer Kautschukstreifen für den Innerlinerkautschuk (G10a) verwendet wird, wobei der Formungsprozess (K2) für ein Laminat einen Streifenwickelschritt umfasst, um einen jeden der Kautschukstreifen spiralförmig zu wickeln.

4. Rohreifen-Formungsverfahren nach einem der Ansprüche 1 bis 3, wobei das Verfahren einen Formungsschritt umfasst, um einen Gürtelpolsterkautschuk (G9) zu formen, indem ein bandartiger, langer Kautschukstreifen außerhalb der Karkasslage spiralförmig gewickelt wird.

5. Rohreifen-Formungsverfahren nach einem der Ansprüche 1 bis 4, wobei in dem Formungsschritt (K1) für eine rohrförmige Karkasse Umfangsstirnflächen (6Es) des Karkasslagenelements (6R1) von sowohl einwärts als auch auswärts in der radialen Richtung des Reifens auf Stoß gefügt werden.

6. Luftreifen-Herstellungsverfahren unter Verwendung des rohrförmigen Basisreifens, der in dem Rohreifen-Formungsverfahren nach einem der Ansprüche 1 bis 5 erhalten wird, wobei das Luftreifen-Herstellungsverfahren
einen Formungsschritt für einen torusförmigen Rohreifen, umfassend
Aufblasen des rohrförmigen Basisreifens zwischen den Wulstkernen (5), um eine torusförmige Form zu erhalten, und Pressen des aufgeblasenen Abschnitts gegen den Innenumfang des Laufflächenrings, der im Voraus außerhalb in der radialen Richtung wartet, und durch einstückiges Fügen, und
einen Rohreifen-Vulkanisationsschritt umfasst.

## Revendications

1. Procédé de formation d'un pneumatique cru, comprenant
un processus de formation d'une carcasse tubulaire avec des âmes de talon (K1) pour former une carcasse tubulaire (6R2) avec des âmes de talon sur un premier tambour (20), qui comprend
une étape de formation d'une carcasse tubulaire (K1a) comprenant l'opération consistant à enrouler (K1a1) un élément de nappe de carcasse analogue à une feuille (6R1) sur une périphérie extérieure du premier tambour (20) dans une couche unique, et
une étape consistant à joindre une âme de talon (K1b) comprenant l'opération consistant à placer une paire d'âmes de talon (5) sur les deux côtés d'extrémité, à l'extérieur et axialement, de la carcasse tubulaire (6R2) sur le premier tambour (20), et
l'opération consistant à mettre en expansion un diamètre du premier tambour (20) avec la carcasse tubulaire (6R2) de telle façon que la carcasse tubulaire (6R2) est pressée contre une périphérie intérieure des âmes de talon (5) et fermement unie à celles-ci ;
un processus de formation d'un stratifié de caoutchouc (K2) pour former un stratifié de caoutchouc cylindrique (11) ayant un diamètre extérieur plus petit qu'un diamètre intérieur de ladite carcasse tubulaire (6R2) en enroulant des éléments en caoutchouc (Ga) pour un pneumatique de base incluant un élément de doublage intérieur en caoutchouc (G10a) sur une périphérie extérieure d'un second tambour (27) dont le diamètre est expansible ;
un premier processus de transport (K3) pour transporter ladite carcasse tubulaire avec des âmes de talons (6R3) depuis ledit premier tambour (20) jusqu'au second tambour (27) en utilisant un transfert (30), et pour maintenir concentriquement la carcasse tubulaire avec des âmes de talon (6R3) radialement à l'extérieur du stratifié de caoutchouc (11) sur le second tambour (27) ;
un processus de formation d'un pneumatique de base tubulaire (K4) en mettant le diamètre extérieur du second tambour (27) en expansion avec le stratifié en caoutchouc (11) de telle sorte que le stratifié en caoutchouc (11) est pressé contre la périphérie intérieure de ladite carcasse tubulaire avec des âmes de talon (6R3) de manière à former un pneumatique de base tubulaire (35) formé en unissant intégralement ledit stratifié en caoutchouc (11) avec la carcasse tubulaire avec des âmes de talon (6R3) ;
**caractérisé par**
un second processus de transport (K5) pour transporter ledit pneumatique de base tubulaire (35) depuis ledit second tambour (27) vers un tambour de mise en forme (37) en utilisant un transfert (36),
dans lequel l'étape de formation d'une carcasse tubulaire (K1a) comprend en outre d'unir en aboutement (K1a2) chaque face d'extrémité circonférentielle (6Es) de l'élément formant nappe de carcasse (6R1) l'une à l'autre, et
dans lequel un rapport d'expansion en diamètre Db/Da d'un diamètre extérieur Db du second tambour en expansion sur un diamètre extérieur Da avant l'expansion du diamètre de celui-ci est dans une plage de 1,025 +/- 0,01.

2. Procédé de formation d'un pneumatique cru selon la revendication 1,
dans lequel ledit élément en caoutchouc (Ga) du pneumatique de base comprend au moins un élément en caoutchouc formant bandelette de talon (G4a) et un élément en caoutchouc formant paroi latérale (G3a) ; une bande en caoutchouc allongée semblable à un ruban (T3, T4) est utilisée pour chaque élément en caoutchouc formant bandelette de talon (G4a) et l'élément en caoutchouc formant paroi latérale (G3a) ; et ledit processus de formation d'un stratifié (K2) comprend une étape d'enroulement de bande consistant à enrouler en spirale chacune desdites bandes en caoutchouc (T3, T4).

3. Procédé de formation d'un pneumatique cru selon la revendication 1 ou 2, dans lequel une bande en caoutchouc allongée semblable à un ruban est utilisée pour ledit caoutchouc de doublage intérieur (G10a), et ledit processus de formation de stratifié (K2) comprend une étape d'enroulement de bande pour enrouler en spirale chacune desdites bandes en caoutchouc.

4. Procédé de formation d'un pneumatique cru selon l'une quelconque des revendications 1 à 3, dans lequel le procédé comprend une étape de formation consistant à former un ruban formant coussin de ceinture (G9) en enroulant en spirale une bande en caoutchouc allongé semblable à un ruban à l'extérieur de ladite nappe de carcasse.

5. Procédé de formation d'un pneumatique cru selon l'une quelconque des revendications 1 à 4, dans lequel, dans ladite étape de formation (K1) d'une carcasse tubulaire, les faces d'extrémité circonférentielle (6Es) dudit élément formant nappe de carcasse (6R1) sont unies en aboutement l'une avec l'autre à la fois depuis l'intérieur et depuis l'extérieur dans la direction radiale du pneumatique.

6. Procédé de production d'un bandage pneumatique en utilisant le pneumatique de base tubulaire obtenu dans le procédé de formation de pneumatique cru selon l'une quelconque des revendications 1 à 5, dans lequel
le procédé de production d'un bandage pneumatique comprend une étape de formation d'un pneumatique cru toroïdal comprenant l'opération consistant à gonfler le pneumatique de base tubulaire entre les âmes de talon (5) pour présenter une forme toroïdale, et à presser la portion gonflée contre la périphérie intérieure de l'anneau pour bande de roulement précédemment mis en attente à l'extérieur dans la direction radiale, et par réunion de manière intégrale, et
une étape de vulcanisation du pneumatique cru.
